(19) Europäisches Patentamt
European Patent Office
Office européen des brevets

(11) **EP 2 073 915 B1**

(12) **EUROPEAN PATENT SPECIFICATION**

(45) Date of publication and mention
of the grant of the patent:
**01.03.2017 Bulletin 2017/09**

(51) Int Cl.:
***B01D 53/84*** (2006.01)

(21) Application number: **07785780.3**

(86) International application number:
**PCT/DK2007/050121**

(22) Date of filing: **30.08.2007**

(87) International publication number:
**WO 2008/025365 (06.03.2008 Gazette 2008/10)**

(54) **BIOFILTER FOR TREATING CONTAMINATED GAS**

BIOFILTER ZUR BEHANDLUNG VON VERUNREINIGTEM GAS

BIOFILTRE SERVANT À TRAITER UN GAZ CONTAMINÉ

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **31.08.2006 DK 200601132**
**01.09.2006 US 824328 P**

(43) Date of publication of application:
**01.07.2009 Bulletin 2009/27**

(73) Proprietor: **Agrotech A/S**
**8200 Århus N (DK)**

(72) Inventor: **ANDERSEN, Mathias**
**8240 Risskov (DK)**

(74) Representative: **Høiberg P/S**
**Adelgade 12**
**1304 Copenhagen K (DK)**

(56) References cited:
**EP-A- 1 614 457      EP-A1- 1 734 010**
**WO-A-93/18800        DE-A1- 10 132 224**
**DE-A1-102004 035 839   DE-U1- 9 115 115**
**US-A- 5 954 858**

## Description

### Field of Invention

This invention relates to biodegradation and biotransformation of contaminants by microorganisms. This invention in particular relates to a biofiltration apparatus for the treatment of contaminants in gas.

### Background

Biofilters are often used to remove environmentally hazardous or malodorous substances in various industries. Biofiltration technology has become increasing popular because it is cheaper than traditional decontamination technologies which involve physical or chemical processes and often the disposal of corrosive wastes. Biofilters are capable of treating both organic and inorganic compounds. They often require only ambient temperatures and pressures and have minimal operation costs.

The primary technologies currently employed for air cleaning are conventional biofilters, biotrickling filters and biological scrubbers.

In conventional biofilters, the microorganisms grow on a matrix of wetted, typically organic, packing material. This could for example be soil, bark, wood chips, peat or compost, which are moisturized by rainwater or a saturated air flow. Normally the air is forced through the filter from the bottom where contaminating particles in the air is being absorbed by the biofilm. The biofilm comprises a layer of microorganisms and liquid which is adsorbed to the organic matrix. The drawback of conventional filters is that the discontinuous supply of water is likely to cause the filter to dry out. Additionally, packing material is degraded over time by the microbial population and has to be replaced periodically. Moreover, the packing material has a tendency of clogging, which leads to uneven distribution of air and pressure drop.

A biological trickling filter consists of an inorganic packing material to which micro-organisms are adsorbed. The filter is periodically sprinkled with recycled liquid. The contaminants in the incoming air diffuse to the liquid phase and become available for the microorganisms adhered to the packing material. The products of decomposition from the microbial activity are released to the liquid, which is recirculated until saturation or inhibition is reached. It is possible to add nutrients and buffers to the liquid in order to control growth and pH. This type of filter may be unstable and expensive to maintain. Periodical removal of the excess biofilm such as backwashing or chemical control is needed because of clogging. Chemical control of the microbial growth is both expensive in terms of the cost of chemicals and the disposal of the waste. Moreover, chemical control and backwashing result in the alteration of the environment and disruption of the equilibrium, and thus lower efficiency of cleaning. The carrier material is generally replaced after a certain period of time. To avoid the problem of clogging from particular materials in the air, additional dust filters are often used with conventional biofilters. However, this technique involves extra expenses. For example, the SKOV biofilter, a biotrickling filter system provided by SKOV A/S of Denmark, has the drawback of clogging and high energy expenses. The SKOV filter consists of two filters wherein the liquid flow is recirculated. In addition to the expenses on controlling clogging, the liquid recirculation also requires energy and equipment costs on pumping.

In a biological scrubber, the waste air is contacted with a scrubbing solution in a vessel which is packed with an inorganic support material. On the surface of the support material, a biofilm of pollutant degrading microorganisms forms, which aerobically degrade the absorbed pollutants. A continuous supply of mineral nutrients is needed. The scrubbing solution is often filtered and recirculated. This technique has high operational and equipment costs because of its complexity.

All of the above-mentioned technologies are associated with various problems. They all take up a relatively large amount of space that otherwise could be used for production. They also have a high tendency of clogging which requires additional care and maintenance. Furthermore, they have relatively high operational costs.

The carrier materials used in existing biofilter may be classified into two major groups: natural carrier material and synthesized carrier material. Natural carrier material such as soil, bark, peat and compost are usually in the form of packed-beds in a biofilter. The level of moisture may be important for the decontamination process. However, maintaining the moisture content in the packed-beds is rather difficult. Moreover, natural carrier materials must be replaced after some time to prevent the filter bed from clogging. Natural carrier materials usually exhibit low biodegradation rates, and hence only capable of treating low concentration contaminants (lower than 25 ppm) and are not ideally suited for treating highly concentrated contaminants.

Synthetic materials, such as ceramics, plastic, clay, stoneware rings, sintered glass raschig rings were tested in biofilters. Although biofilters with synthetic materials are capable of treating contaminants of higher concentrations, the excess biomass growth and clogging still remains a huge challenge. The clogging often creates a pressure drop in the biofilter which leads to an inefficient and inoperable state of the biofilter and possible break-down in the future.

In addition to backwashing, chemical control and the use of dust filters, numerous other attempts have been made to solve the problem of clogging in conventional biofilters, cf. below.

US 6,721,020 B1 adopted a multi-stage system which involves sacrificial filtration and biological filtration. Such a system is expensive, complex, and space-consuming.

EP 1,091,797 B1 discloses the use of a filtering material which is characterized by downwardly increasing biofiltration capacity. Such material comprises up to 5 different layers of different carrier materials such as peat, wood shaving and bark. Manufacturing such layered material may be time-consuming. Moreover, the biofilter can only process a low gas flow about 250 m$^3$/h.

US 2006/0027099 discloses a "rotating biofilter" for treating contaminants and odours. The biofilter is constantly rotating thereby reducing the problem of clogging. However this requires an additional motor and thus undesirable expenses of energy costs.

PCT/KR01/02092 teaches a biofilter equipped with a stirrer for preventing precipitation of bacteria. This filter also requires high energy costs and equipment costs.

WO 93/18800 discloses a biofilter wherein biomass is adhered directly to the permeable surface of straight passage supports.

DE 101 32 224 discloses a biofilter wherein biomass is adhered directly to permeable panels from open-pored granules which are glued together.

None of the aforementioned attempts have successfully solved the problem of clogging in a cost-effective manner. There is an unresolved need for a biofilter which is easy to maintain and essentially free of clogging while at the same time still having a high mass transfer.

EP 0632730 B1 teaches an immobilized film reactor in which the liquid flow is recycled. Such recycling decreases the efficiency of mass transfer in the film reactor. The reactor comprises multiple straight passages with a size about 6 mm x 6 mm, which eventually leads to clogging, unless biomass removal is performed. To ensure a smooth operation, a large amount of liquid is required in the immobilized film reactor to remove excessive biomass and prevent clogging. The ratio between the gas volume passing through the biofitter and the liquid volume supplied in the immobilized film reactor is calculated to be at most 1728. In other words, only up to 1728 litres of gas can be treated when 1 litre of liquid is supplied to the film reactor.

## Summary

The design of a biofilter is important for the operation of the biofilter at peak capacity and performance level. However, the capacity is a combined result involving many factors, such as the loading (flow rate) of contaminated gas, the relative humidity of the gas and the carrier material, as well as the design of the carrier materials used in the biofilters.

The present invention provides a cost-effective alternative to existing biofilters. A biofilter according to the present invention is essentially free of clogging and offers a reduction in equipment costs, disposal costs and energy costs. Also, a biofilter according to the present invention has a more efficient transfer of pollutants than many existing biotrickling filters.

As the sustainable biofilters according to the present invention do not suffer from problems associated with clogging, they do not require backwashing or chemical control to remove excess microorganisms.

The present invention in another aspect provides a method according to claim 1.

It is another object of the present invention to provide a method for efficient biofiltration which is cost-effective and self-sustaining, i.e. essentially free from maintenance - e.g. in order to solve problems associated with clogging.

There is also provided a biofilter according to claim 11 for performing the above-cited methods. fluid flows upwardly and the liquid flow downwardly. A biomass is adsorbed onto the carrier material and humidified by the liquid.

The liquid and the gas flow counter currently to provide a higher filtering efficiency, i.e. transfer of one or more pollutants from the gas phase to the liquid phase and/or the biomass adsorbed onto the carrier material. The carrier material is capable of exerting a capillary force on the liquid.

The carrier material exerting a capillary force in at least one direction can be any material capable of retaining moisture. Non-limiting examples include porous carrier materials and/or fibrous carrier materials, such as the materials defined in more detail herein below. Alternatively, the carrier material can be in the form of beads exerting a capillary force in at least one direction and capable of retaining moisture.

The above and other objects, novel features and other advantages of the present invention will become apparent from the following detailed description of the invention.

## Brief Description of the Drawings

Fig. 1 shows the capacity for removing ammonia by using a biofilter in one embodiment, measured by the impinger method,

fig. 2 shows the capacity and efficiency for removing ammonia as a function of the loading rate of ammonia, by using a biofilter in one embodiment, measured by use of Innova 1309.

fig. 3 shows the capacity for removing contaminated gases by using a biofilter in one embodiment, measured by GCMS,

fig. 4 shows the capacity of removing odour by using a biofilter in one embodiment, measured by an olfactometric method,

fig. 5 shows the specific flow of gas through the biofilter as a function of the pressure drop,

fig. 6 shows one embodiment which consists of five tube filters,

fig. 7 is a schematic drawing of a tube filter installed along the roof,

fig. 8 is a schematic drawing of a tube filter integrated in a chimney outlet,

fig. 9 is a schematic drawing of the liquid and gaseous flow of a biofilter,

figs. 10, 11 and 12 show different embodiments of a tube filter,

fig. 13 is a picture of a tube filter seen from one end,

fig. 14 is a cross-sectional view of a tube filter with a layer of carrier material along the interior surface of the tube solid support, and

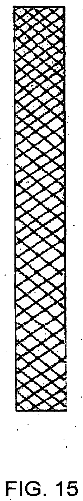

fig. 15 is a schematic drawing of a fibre matrix in a tube in one preferred embodiment.

## Detailed Description of the invention

The biofilter according to the present invention has the ability of cleaning a contaminated air flow. The source of pollution may originate from agriculture, such as swine facilities, composting, slaughterhouse industries, food industries, waste water treatment plants, chemical industries and other industries where contaminated air is considered a problem.

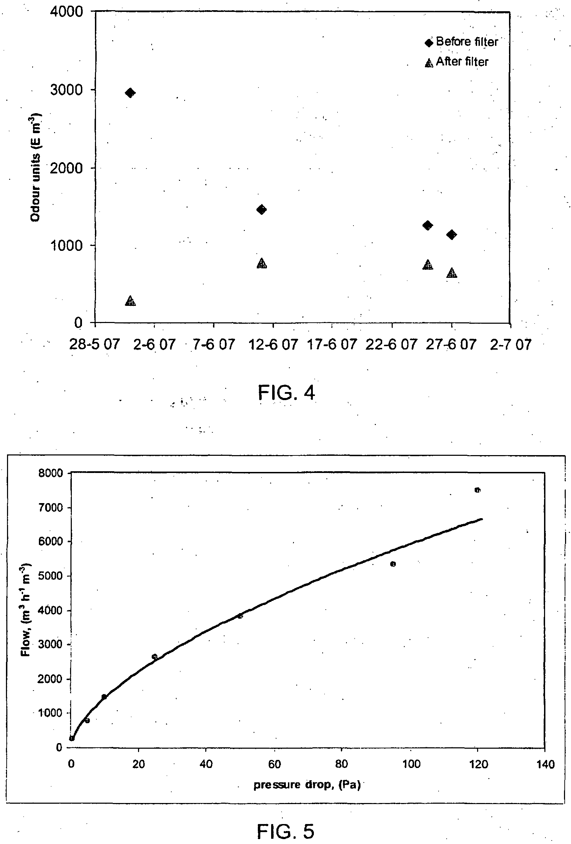

This invention in one aspect provides a method for decontaminating a gas comprising one or more pollutant components. The components of interest are substantially removed when the gas flow passes through the biofilter. A biofilter according to the present invention is useful for the treatment of a high flow of contaminated gas, such as a flow of 7000 $m^3/h/m^3$ or more. (The flow is defined as the maximum air flow passed through every cubic metre of empty filter.) Fig. 5 shows the specific flow of gas through the biofilter and the corresponding pressure drop across the ends of the biofilter. The pressure drop relates to the energy necessary for operating the biofilter. The biofilter according to the present invention has the capacity of treating air flows having all levels of contaminations.

The contaminated gas, intended for decontamination by the biofilters according to the present invention, can comprise one or more biodegradable gaseous components, such as, but not limited to, ammonia, hydrogen sulphide, dimethyl sulphide (DMS), dimethyl disulfide (DMDS), methyl mercaptan and other in inorganic volatile compounds or volatile organic compounds (VOCs) such as propanoic acid, 2-methylpropanoic acid (iso-butanoic acid), n-Butyric Acid, *i*-Valeric Acid og n-Valeric acid butanoic acid, octanoic acid, 4-methylphenol (p-cresol), indole, dichloromethane and skatole; nitrogen oxides, which for example includes nitrous oxide, nitric oxide, and nitrogen dioxide; carbon monoxide; sulfur oxides, which includes sulfur dioxide and sulfur trioxide; hazardous air pollutants (HAPs), and biodegradable malodorous compounds such as from putrescine materials, or other undesirable gaseous, biodegradable materials.

The following table provides a non-limiting list of contaminants for the purpose of this invention:

| TYPES | EXAMPLES |
| --- | --- |
| Aliphatic Hydrocarbons | Hexane |
| Aromatic Hydrocarbon | Benzene, Phenol, Toluene, Xylene, Styrene, Ethylbenzene |
| Chlorinated Hydrocarbon | Dichloromethane |
| Nitrogen-Containing Carbon Compounds | Amines, Aniline |
| Sulfur-Containing Carbon Compounds | Carbon Bisulfide, Dimethyl Sulfide, Dimethyl Disulfide |
| Alcohols | Methanol, Ethanol, Butanol, Propanol |
| Aldehydes | Formaldehyde, Acetaldehyde, |
| Carbonic Acids | Butyric Acid, Vinyl Acetate, Ethyl Acetate, Butyl Acetate, Isobutyl Acetate |
| Ethers | Diethyl Ether |
| Ketones | Acetone, Methyl Ethyl Ketone |
| Nitro Ester | Nitroglycerin (Energetics) |
| Inorganic | Ammonia, Hydrogen Sulfide |

(continued)

| TYPES | EXAMPLES |
|---|---|
| Aerosols & Particulates | Biodegradable Organics |

Longer tubes and a greater surface area are usually needed to create a higher efficiency when the contaminant is less soluble.

A biofilter system according to the present invention comprises at least one biological tube filter. A tube filter comprises a solid support which defines a flow passage enabling the flow of e.g. air. At least one carrier material is attached to the inner surface of the solid support whereby allowing the colonization of microorganisms. A tube filter in this invention enables a smooth passage of air and reduces or eliminates clogging. The tube filter according to the present invention may be in any non-circular shape or form. A tube filter in the biofilter system according to the present invention may be in any shape or form.

The tube filters have advantages with regards to flexibility of the location of installation. The biofilter according to the present invention may be space-saving and installed anywhere. The tube filter may be of any shape, but preferably a substantially elongated shape. The shape chosen may depend on the space available. The cross section of the tube filter according to the present invention may be any non-circular shape, such as, but not limited to, square, rectangular, triangular or polygonal. The cross section of a tube filter in the biofilter system according to the present invention may be any shape, such as, but not limited to, square, rectangular, triangular, polygonal or circular.

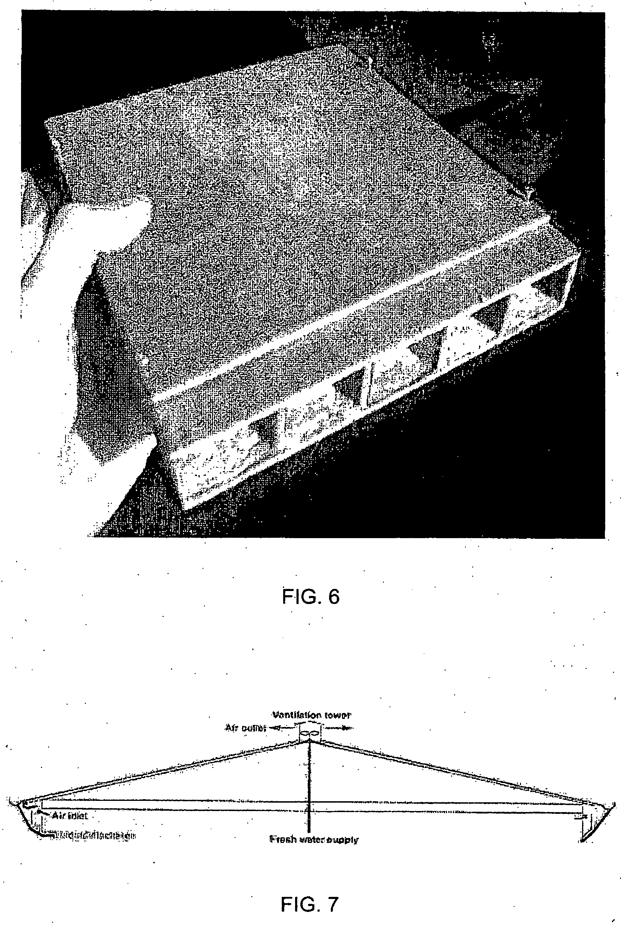

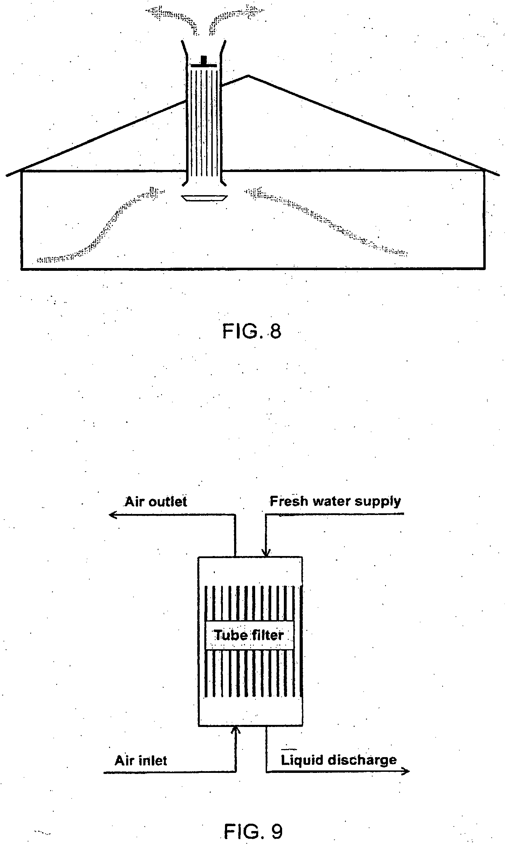

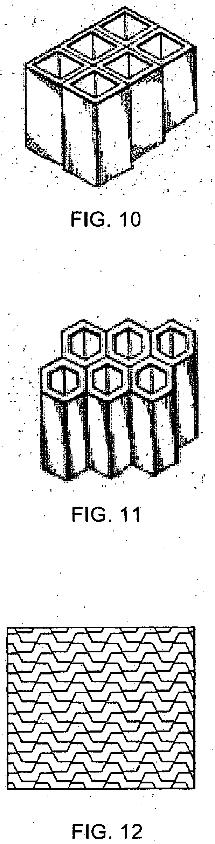

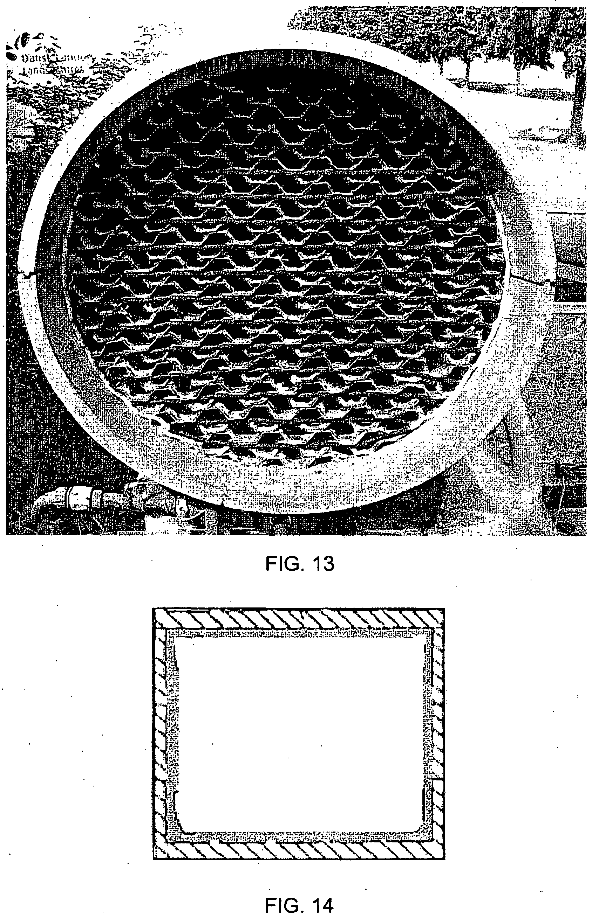

One may stack the tubes in rows to be placed on any surface with or without inclination. Fig. 6 shows five tube filters stacked in a row. Fig. 10 and Fig. 11 show different shapes of tube filters and how they may be stacked together. Fig. 12 is a cross-sectional view of a biofilter wherein the tube filters have an irregular shape. The tubes may also be stacked to fit any rectangular or cylindrical objects, such as a container or a chimney. The tubes may also be installed along a rafter or a purlin. In another embodiment the tube may be installed on a mobile unit to be transportable. Fig. 7 shows one embodiment where a biofilter according to the invention is installed along the inclined roofs. Fig. 8 shows another embodiment where a biofilter is installed and integrated in the chimney outlet. Fig. 13 shows a picture of an embodiment of the biofilter where the tube filters are integrated in a ventilation tube. Horizontal black soaker hoses, extending from side to side of the ventilation tube, distribute the water to all the tube filters.

According to the present invention, during operation the contaminated gas may be introduced into at least one tube filter from a proximal end opening. The gas comes in contact with the biomass grown on and within the carrier material located in the tube. The biofilm is humidified by a liquid flow introduced into the tube. The liquid flow may be in any direction, but it has a general counter current direction with the gas flow. The contaminants in the gas may be absorbed by the liquid and substantially biodegraded by the microorganisms. The treated gas is released from another proximal end opening. In one preferred embodiment, the inlet and the outlet opening are located on opposite direction.

The gas may be propelled by stack effects. The flow of the gas may be pulse flow or continuous flow. Ventilation devices may be installed at the inlet or the outlet of the biofilter to facilitate the gas flow. These devices are known by a skilled person in the art. In one preferred embodiment, a ventilator or a fan may be located at the inlet of the gas flow to suck the contaminated gas.

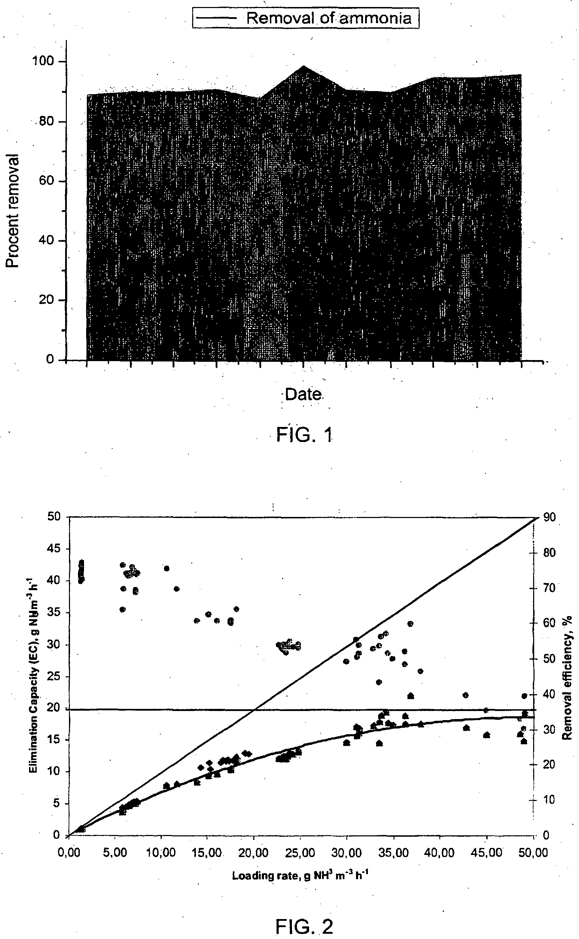

Fig. 1 shows the removal of ammonium from the air provided by a pilot biofilter according to the present invention with a loading rate of approx. 7 g ammonium per hour per cubic metre of tube filter material.

Fig. 2 shows the capacity of eliminating ammonium from the air as a function of loading rate of ammonium in the biofilter provided by a full scale biofilter according to the invention, installed for decontamination of the air from a pigsty. The squares show the absolute elimination of ammonium in grams ammonium per hour per cubic metre of filter material (g $NH_3$ $h^{-1}m^{-3}$). Fig. 2 shows that the biofilter is capable of removing maximally 19 g $NH_3$ per hour per cubic metre. The circles show the removal efficiency of the tube filter. The efficiency is seen to decrease with increasing loading rate of ammonium. Below a loading rate of 10 g $NH_3$ $h^{-1}m^{-3}$ the removal efficiency is around 75%. The maximum removal capacity of 19 g $NH_3$ $h^{-1}m^{-3}$ is reached with a removal efficiency above 50%.

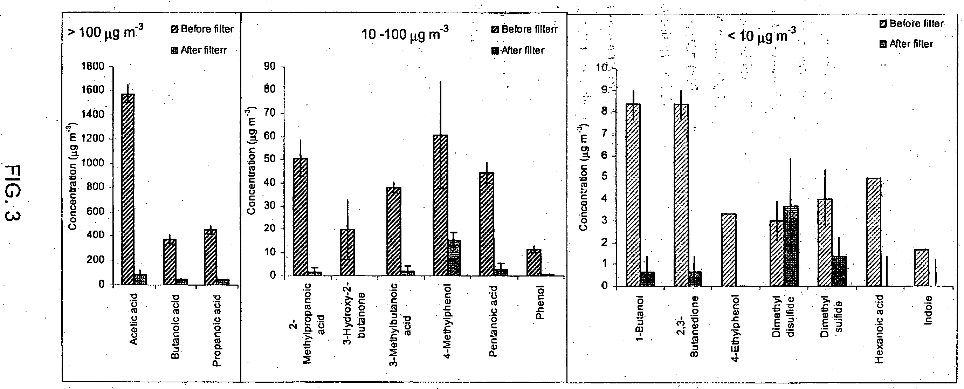

Fig. 3 shows the capability of the biofilter, in one embodiment of the invention, for removing key odour components. The components are grouped depending on abundance with a concentration of more than 100 $\mu g/m^3$ to the left, a concentration of between 10 and 100 $\mu g/m^3$ in the middle and a concentration of less than 10 $\mu g/m^3$ to the right of the figure. The figure shows bar charts with the concentrations of the odour components before (hatched) and after the biofilter with error bars indicating the standard deviation. The concentrations were measured using GCMS. The data were obtained at one particular day at a gas flow rate of 4000 $m^3$ per hour per cubic metre of filter material. For malodorous compounds such as acetic acid, butanoic acid, propanoic acid, 2-Methylpropanoic acid, 3-Hydroxy-2-butanone, 3-Methylbutanoic acid, 4-Methylphenol, pentanoic acid, phenol, 1-Butanol, 2,3-Butanedione, 4-Ethylphenol, dimethyl sulfide, hexanoic acid and Indole the biofilter has achieved removal efficiencies between 66% and 100% with an average of 93%. The rise in the concentration of dimethyl disulfide is due the interference with thiols.

Fig. 4 shows the odour removal in odour units of one embodiment of the biofilter according to the invention. This was measured on a full scale tube filter installed in connection with a pigsty. Data were collected over 4 days. Odour measurements were performed using an olfactometric method. Each sample day consists of an average of 3 samples before and samples after the filter. The filter was running at maximum load (4000-5600 $m^3$ $h^{-1}$ $m^{-3}$ filter material). The squares illustrate the odour concentration before the filter while the triangles illustrate the odour concentration after the filter. At maximum load the filter shows removal efficiencies for odour between 40% and 90 % with an average of 64 %. As the person skilled in the art will know, the olfactometric method is not in any way an exact measurement and the apparent drop in filter efficiency is most likely an indicator of the uncertainty of the olfactometric measurements.

The biofilm in the biofilter may comprise various types of microorganisms. The microorganisms may be introduced artificially or naturally. The carrier material may be inoculated with microorganism cultures before operation. The biofilm may also develop when the naturally occurring microorganisms in the surrounding environment adhere onto the carrier material. The types of microorganisms vary according to the different environments within the biofilter. The microorganisms may be fungi or bacteria. Different microorganisms may develop according to the environment provided. For example, anaerobic bacteria may develop at locations where oxygen is not available. Microorganisms capable of biodegrading contaminants at a relatively low concentration may develop near the outlet of the gas flow.

Examples of microorganisms can be used in the biofilters according to the present invention may include aerobic bacteria or anaerobic bacteria such as *Brahamella sp.*, *Streptomyces*, *Pasteurella sp.*, *Achromobacter*, *Xylosoxidans*, *Pseudomonas strutzeri*, *Penecillium sp.*, *Bacillus sp.*, *Micrococcus sp.*, *Thiobacillus sp.*, *Nitrosomonas sp.*, *Nitrospira*, *Acidithiobacillus*, *thiooxidans*, *Hyphomicrobium VS*, *Xanthomonas*, *Actinomyces*, *Arthrobacter*, *Bifidobacterium*, *Corynebacterium*, *Frankia*, *Micrococcus*, *Micromonospora*, *Mycobacterium*, *Nocardia*, *Propionibacterium* and *Stenotrophomonas*. The carrier material in one embodiment may be inoculated with the appropriate living microorganisms prior to the operation of the biofilter. In another embodiment, the microorganism may be introduced on the carrier material during the introduction of the contaminated gas. Method of inoculating and precoating is known to a skilled person in the art.

The liquid flow introduced into the biofilter humidifies the biofilm and transport the products of degradation. The liquid flow has a generally opposite direction against the gas flow. The counter current movement of the contaminated gas and the liquid may provide efficient diffusion of the contaminants to the biofilm. Fig. 9 is an illustration of a counter current flow arrangement.

The intermediates of the biofiltration process may be toxic for certain micro-organisms or are in themselves an inhibitor of the degradation process. The liquid flow may transport the products of degradation out of the biofilter so the inhibition may be reduced. The liquid is preferably not recycled to maximize the efficiency of mass transfer.

In one preferred embodiment, tap water or ground water may be supplied from the outlet of the gas flow by sprinkling or distribution tubs. On the way down, the water flow meets a counter current gas flow that delivers the contaminants to the liquid. Figs. 7, 8 and 9 show that the contaminated air is sucked from the building through the filter and out in the ventilation tower while fresh water is supplied in the top of the filter and the contaminated liquid is discharged in the bottom of the filter. The advantage of counter current arrangement is that the contaminants may have a higher partial pressure in the gas than in the corresponding liquid. Due to the counter current flow, a biofilter is capable of dealing with all ranges of concentration of contaminants along the tube, higher at the inlet and around zero at the outlet, which enables the highest efficiency in mass transference.

The liquid will be collected at a proximal end of the biofilter. It may be disposed or cleaned in a wastewater reactor for reuse. For biofilters in farming industries, the waste liquid may be drained to the manure tank where it is used later as fertiliser. In one embodiment, if the carrier material is not inoculated beforehand, the liquid may be recycled and re-supplied to the biofilter to accelerate the colonisation of the microorganisms during the initial period after installation. In a preferred embodiment, it is not necessary to recirculate the liquid. When the liquid is recycled less contaminants may be dissolved in the liquid because of a lower concentration gradient along the tube filter, thus a reduced mass transference. Therefore it is preferred that a liquid flow is supplied from other sources than recycled, such as, but not limited to ground water, rain water.

The thickness of the biofilm may differ in different sites within the tube filter. It may for example, be between 5 and 500 μm. The biofilm is substantially moisturized by the liquid flow in a biofilter. It is generally preferred that the liquid flow does not overflow and submerge the bio-film. An overflow is likely to create a higher diffusion barrier for the contaminants to be diffused into the biofilm. An oxygen sensor, for example, provided by Unisense A/S of Denmark, may be used to determine the flow condition of a liquid on a predetermined site. In a preferred embodiment, the biofilm is about 90% or more moisturized and the carrier material is around 40% moisturized.

The liquid flow may be controlled by a flow controller. A flow controller according to the present invention may be any device which is capable of measuring the concentration of a predetermined substance in the liquid flow. The flow controller may comprise an ammonia sensor or a nitrate sensor when the contaminant of interest is ammonia. The flow controller may also be an electronic device which measures the conductivity in the liquid. The device may then increase the flow when the conductivity is too high and decrease the flow when the conductivity is too low. The device controls the flow so that the concentration of dissolved salt in the liquid remains constant regardless of the load of contaminants in the gas flow. A flow controller may help provide a more stable environment which enables an optimisation of the microbial conditions in the biofilter.

Additional nutrients, buffers, and tracers may be supplied to the microorganisms. Types of nutrients to be supplied are known to a skilled person in the art. In a preferred embodiment, micronutrients in the ground water or from the air may be readily available for the microorganisms that no additional supply is necessary. For example, in pig industry, dust coming from the skin of the pigs may be utilized by the microorganisms in the biofilter.

The biofilter according to the present invention provides a stable environment for a wide array of microorganisms. The gradual increment of dissolved contaminants throughout the filter enables a stratification of microorganisms to develop. This result in a large diversity of microorganisms adapted to a particular concentration and target of contaminants. Microbial diversity provides the advantage with regard to the adaptation to new contaminants and to the range and concentration of contaminants the filter may be capable to treat.

The biofilm according to the present invention may comprise microorganisms, water, extracellular polymeric substances (EPS), multivalent cations, inorganic particles, biogenic material (detritus) as well as colloidal and dissolved compounds. The biofilm matrix provides the possibility that the resident microorganisms may form stable aggregates of different cell types, leading to the development of a functional, synergistic microconsortium. The biofilm according to the present invention is humidified with a liquid supplied to the biofilter. The biofilm comprises at least one microorganism capable of eliminating undesired organic or inorganic contaminants or pollutants, such as compounds containing carbon, nitrogen, phosphorus, sulfur, and iron atoms. The biofilm is adsorbed to the carrier material. The microorganisms may metabolise the contaminants and release the end products of this transformation, such as $CO_2$, $N_2$, or other intermediates, depending on the contaminants. Different micro-organisms may spontaneously colonize the biofilter and adapt to their preferred environment, according to the concentration, compounds and pH in the tube filters.

The carrier materials for the purpose of this invention may be any material exerting a good capillary force in at least one direction. The carrier material may be a fibrous or porous material, or it may be in the form of beads. Also the material may be any material having a surface capable of exerting a capillary force in at least one direction. Moreover, the material may be any material capable of exerting a capillary force in at least one direction when suitably arranged. It is preferred that the carrier material has a thickness of at least 50 $\mu$m. The cost-efficiency of the carrier material may be represented by an Andersen factor set forth herein. The Andersen factor preferably as high as possible.

The carrier material is located within the solid support of a tube filter. The carrier material may be attached to, glued, or adhered to any surface inside the solid support in any way. In another embodiment, the solid support may comprise extrusions to which the carrier material may be adhered. It is preferred that the solid material comprises an unobstructed air passage. In a preferred embodiment, all inner surfaces within a tube filter are covered by at least one type of carrier material. The preferred carrier material according to the present invention is substantially evenly wetted during operation.

Biofilter system: A biofilter system comprising at least one tube filter. The filter system may be in any form and shape according to the site of installation. The filter system for example may have a length of at least 1 meter. The biofilter system in one embodiment may be branched wherein the individual branch may be fitted along different rafters. Each branch may comprise a plurality of tube filters. The biofilter may be any length and form such as between 1 to 10 meters, such as between 1 to 5 meters, for example between 2 to 4 meters.

Tube filter: A tube filter according to the present invention is a solid support comprising a flow passage and at least one carrier material for the colonization of microorganisms capable of biodegradations. A tube filter is preferably longer than 1 m. For example the tube filter may be at least 1 meter, such as between 1.5 to 6 meters, for example between 2 to 4 meters, such as between 2.5 m to 3.5 m, for example 3 to 5 m in length.

Preferably the tube filter in a biofilter according to the present invention has an upward angle of between 1° to 90°, such as between 10° to 80°, for example 20° to 70°, such as between 30° to 60°, for example 40° to 50°, like 45° in relation to horizontal, whereby allowing a downwardly flow of a liquid and a upwardly flow of a gaseous fluid.

A tube filter comprises a solid support which defines an inner surface and an outer surface. The solid support of a tube filter according to the present invention may be any material, such as, but not limited to, PVC, wood, mental and glass fiber. The solid support is not permeable to liquid.

Carrier materials: The carrier material according to the present invention may be any material capable of retaining moisture and exert capillary force and/or high surface tension. The carrier material may comprise mixtures of different materials. The carrier material may be fibrous, porous, or in the forms of beads or pellets. The carrier material may be, but not limited to, fiberglass, glass wool, mineral wool, cellulose fiber, ceramic, LECA, straw, chipped bark, compost, perlite, vermiculite, anthracite, activated carbon, charcoal, diatomaceous soil, chitin, chitosan, pozzolan, time, marble, clay, iron-oxide-coated minerals (e. g sand), double metal-hydroxides, rockwool, zeolithes, fly ash, soil, limed soil, iron-enriched soil, humus, lignin, leaves, seaweed, algae, alginate, xanthate, peat moss, bone gelatin beads, moss, wool, cotton, coco fibres, other plant fibres, and modification hereof, plastic fibers or porous plastic material like foam rubber polyethylene or polyester fibrous mesh or styrofoam.

Preferably, the material is capable of exerting good capillary force and/or high retentivity of liquid. The retentivity of liquid may be measured by passing dry air through a tube filled with wet carrier material and measuring the decrease in weight at predetermined time intervals. It is also preferred that the material has good ability to conduct and/or channel the liquid. In one preferred embodiment the carrier material may be fibreglass, glass wool, mineral wool, cellulose fiber, rockwool, liginin, cotton, coco fibers, plastic fibers or porous plastic material like foam rubber polyethylene or polyester fibrous mesh or styrofoam. When the liquid is transferred downwardly within the capillary space within the carrier material, the capillary force may pull the liquid upward against the force of gravity. A carrier material has higher moisture content where a greater capillary force or surface tension is exerted.

The carrier material may be optionally be swelled while wetted. The carrier material may have a swelling characteristic of 1:1.2. The characteristic is defined as the ratio of the dry weight to wet weight of the carrier material. The swelling characteristics may range from 1:1.2 to 1:1.5, for example be 1:1.48, for example 1:1.45, such as 1:1.40, like 1:1.35, for example 1:1.30, such as 1:1.25, like 1:1.21.

Fibrous Material

In one embodiment the carrier material is fibrous material. The fibers may be in any form capable of facilitating a capillary force in at least one direction when assembled to form a fibrous material. The fibers may be solid or hollow fibers. The fibers may be arranged in parallel with each other. The fibers may have an angled orientation in comparison with the orientation of a tube. The fibers of the fibrous material used in the present invention may have any diameter capable of facilitating a capillary force in at least one direction when assembled to form a fibrous material. Preferably the fibers, solid and/or hollow have a diameter of less than 90 $\mu$m, such as a diameter of less than 50 $\mu$m between, for example a diameter of less than 30 $\mu$m, like a diameter of less than 25 $\mu$m. For example the fibers have a diameter of 19 to 24 $\mu$m, such as 20 to 22 $\mu$m. Most preferably they have a diameter of about 20 $\mu$m.

Preferably the hollow fibers have an inner diameter of less than 60 $\mu$m, such as an inner diameter of less than 50 $\mu$m, for example less than 40 $\mu$m, such as less than 30 $\mu$m, like a diameter of less than 25 $\mu$m. For example the fibers may have an inner diameter of 15 to 25 $\mu$m, such as 5 to 15 $\mu$m. Most preferably they have an inner diameter of about 2 to 20 $\mu$m.

In one preferred embodiment, the fibrous material may be placed in different orientations so that the liquid may zigzag its way down in a tube filter. In another embodiment the fibrous material has at least two layers of fibers on top of each other. In another embodiment the fibers are directed in at least two orientations so the liquid may zigzag its way down whereby provides a higher water retentivity. Fig 10 shows an exemplary fiber matrix comprising two layers wherein the orientation of the first layer and the second layer fibers are about 50°. A difference in the orientation of the fibers increases the water retentivity of the carrier material and helps prevent the biofilm to dry out.

Porous Material

In one embodiment the carrier material is porous material. The physical form of the porous material is not particularly limited, and may be any form of the desired porosity and pore size. Preferably the material has a pore size resulting in a capillary force useful for the present invention. Preferably the open pores are interconnected to form a porous space. Preferably the interconnected porous space extends through the whole length of the material. For example, the porous material may be a mesh of a desired pore size, i.e. mesh size; may consist of sintered particles; or, preferably, may consist of a foamed article, like plastic or metal foam.

The open cells of the porous material may have a diameter between 5 to 100$\mu$m, for example a diameter between 5 $\mu$m to 50 $\mu$m, or for example a diameter between 50 $\mu$m to 100 $\mu$m, or for example a diameter between 5 $\mu$m to 35 $\mu$m. like a diameter between 35 $\mu$m to 65 $\mu$m. for example between 65 to 100 $\mu$m, for example between 5 to 70 $\mu$m, such as between 35 to 100 $\mu$m, like between 15 to 90 $\mu$m, for example between 20 to 100 $\mu$m, such as between 35 to 95 $\mu$m, like between 15 to 60 $\mu$m, for example between 5 to 25 $\mu$m, such as between 25 to 45 $\mu$m, for example between 45 to 65 $\mu$m, like between 65 to 85 $\mu$m, for example between 85 to 100 $\mu$m, such as between 5 to 95 $\mu$m, like between 10 to 100 $\mu$m, for example between 15 to 85 $\mu$m, like between 45 to 55 $\mu$m, for example between 35 to 75 $\mu$m, like between 70 to 80 $\mu$m, for example between 80 to 90 $\mu$m, like between 65 to 90 $\mu$m, for example between 45 to 70 $\mu$m, such as between 35 to 55 $\mu$m,

Beads

In one embodiment the carrier material comprises beads. Beads used according to the present invention may be in any form capable of facilitating a capillary force in at least one direction when assembled. Preferably the beads are arranged to form longitudinal capillary spaces.

The beads may have a diameter between 15 to 90$\mu$m, such as a diameter between 15 $\mu$m to 50 $\mu$m, for example a diameter between 15 $\mu$m to 30 $\mu$m, like a diameter between 15 $\mu$m to 20 $\mu$m. for example between 30 to 90

$\mu$m, for example between 15 to 60 $\mu$m, such as between 15 to 80 $\mu$m, like between 25 to 90 $\mu$m, for example between 17 to 87 $\mu$m, such as between 30 to 60 $\mu$m, like between 20 to 70 $\mu$m, for example between 40 to 50 $\mu$m, such as between 15 to 45 $\mu$m, for example between 45 to 90 $\mu$m, like between 15 to 40 $\mu$m, for example between 15 to 70 $\mu$m, such as between 15 to 75 $\mu$m, like between 15 to 85$\mu$m, for example between 15 to 88 $\mu$m, like between 30 to 70 $\mu$m, for example between 35 to 80 $\mu$m, like between 40 to 70 $\mu$m, for example between 40 to 80 $\mu$m, like between 40 to 90 $\mu$m, for example between 50 to 70 $\mu$m, such as between 50 to 80 $\mu$m, like between 50 to 90$\mu$m, for example between 60 to 70$\mu$m, like between 60 to 80 $\mu$m, such as between 60 to 90 $\mu$m, for example between 70 to 80 $\mu$m, like between 70 to 90$\mu$m, such as between 80 to 90$\mu$m.

Passage area: It refers to the average cross-sectional area of the air passage where the contaminated air passes through in a single tube filter. The passage area is generally smaller than the cross-sectional area of a tube filter because of the colonized microorganisms. A tube filter may has a passage area between 1 to 100 cm$^2$, for example between 1 to 50 cm$^2$, for example between 50 to 100 cm$^2$, such as between 1 to 25 cm$^2$, like between 25 to 50 cm$^2$, for example between 50 to 75 cm$^2$, such as between 75 to 100 cm$^2$, like between 1 to 30 cm$^2$, for example between 30 to 70 cm$^2$, such as between 70 to 100 cm$^2$, for example between 1 to 15 cm$^2$, like between 15 to 30 cm$^2$, for example between 30 to 45 cm$^2$, such as between 45 to 60 cm$^2$, like between 60 to 75 cm$^2$, for example between 75 to 90 cm$^2$, like between 90 to 100 cm$^2$, for example between 1 to 10 cm$^2$, like between 10 to 20 cm$^2$, for example between 20 to 30 cm$^2$, like between 30 to 40 cm$^2$, for example between 40 to 50 cm$^2$, such as between 50 to 60 cm$^2$, like between 60 to 70 cm$^2$, for example between 70 to 80 cm$^2$, like between 80 to 90 cm$^2$, such as between 9 to 11 cm$^2$, for example between 8 to 13 cm$^2$, like between 7 to 15 cm$^2$, such as between 8 to 17 cm$^2$, like between 7 to 19 cm$^2$, for example between 6 to 21 cm$^2$, such as between 5 to 23 cm$^2$, for example between 4 to 25 cm$^2$, like between 3 to 27 cm$^2$, like between 3 to 30 cm$^2$, such as between 3 to 40 cm$^2$, for example between 3 to 50 cm$^2$, such as between 3 to 60 cm$^2$, like for example between 3 to 70 cm$^2$.

Cross-sectional diameter: In some embodiments, the cross-sectional diameter may not be measurable. The cross-sectional diameter is measurable when the tube fitter is substantially cylindrical. The cross-sectional diameter, when measurable, may be between 1 to 20 cm, for example between 1 to 10 cm, for example between 10 to 20 cm, such as between 1 to 5 cm, like between 5 to 10 cm, for example between 10 to 15 cm, such as between 15 to 20 cm, like between 1 to 3 cm, for example between 3 to 5 cm, such as between 5 to 7cm, for example between 7 to 9 cm, like between 9 to 11 cm, for example between 11 to 13 cm, such as between 13 to 15 cm, like be-tween 15 to 17 cm, for example between 17 to 19 cm, like between 4 to 7 cm, for example between 3 to 8 cm, like between 2 to 9 cm, for example between 4 to 11 cm, like between 1 to 15 cm, for example between 5 to 15 cm, such as between 3 to 18 cm, like between 2 to 17 cm, for example between 2 to 10 cm, like between 1 to 7 cm , such as between 1 to 6 cm, for example between 1 to 4 cm, like between 4 to 17 cm, such as between 5 to 18 cm , like between 6 to 19 cm , for example between 7 to 20 cm, such as between 3 to 20 cm, for example between 2 to 20 cm.

Specific surface area: The surface area of biofilm support per unit volume of a tube filter. The specific surface area is given in m$^2$/m$^3$. A preferred specific surface area is between 80 to 500 m$^2$/m$^3$. The specific surface area may be 80 to 90 m$^2$/m$^3$, such as 90 to 100 m$^2$/m$^3$, for example 100 to 200 m$^2$/m$^3$, like 200 to 300 m$^2$/m$^3$, for example 300 to 400 m$^2$/m$^3$, such as 400 to 500 m$^2$/m$^3$ like 80 to 95 m$^2$/m$^3$, for example 85 to 250 m$^2$/m$^3$, like like 95 to 350 m$^2$/m$^3$.

Specific surface liquid flow rate: The volume of liquid passing over a surface area unit per time unit. The specific surface liquid flow rate is given in ml/h/m$^2$.

The preferred specific surface liquid flow rate for a tube filter may be between 30 to 500 ml/h/m$^2$, such as between 50 to 300 ml/h/m$^2$, for example 70 to 150 ml/h/m$^2$, like 125 ml/h/m$^2$, such as 100 to 400 ml/h/m$^2$, like 150 to 450 ml/h/m$^2$, for example 350 to 500 ml/h/m$^2$ Preferred ranges include 100 to 500 ml/h/m$^2$, such as 200 to 400 ml/h/m$^2$, for example 250 to 350 ml/h/m$^2$.

Specific surface liquid velocity: The speed of the liquid passing through a surface area per time unit. The specific surface liquid speed is given in cm/h/m$^2$ or m/h/m$^2$.

The preferred liquid speed for a tube filter may be between 8 cm/h/m$^2$ to 7 m/h/m$^2$, such as between 10 cm/h/m$^2$ to 5 m/h/m$^2$, for example 100 cm/h/m$^2$ to 3 m/h/m$^2$ like 50 cm/h/m$^2$ to 2 m/h/m$^2$. Preferred ranges include 50 cm/h/m$^2$ to 5 m/h/m$^2$, such as 1 m/h/m$^2$ to 4 m/h/m$^2$, for example 2 m/h/m$^2$ to 3 m/h/m$^2$.

Specific surface hydraulic residence time: The time it takes for a liquid to pass through a square meter of carrier material in a tube filter. It is given in h/m$^2$. In a preferred embodiment the specific surface hydraulic residence time may be between 0.5 to 7.0 h/m$^2$, such as 1 to 7.0 h/m$^2$, like 1 to 6.6 h/m$^2$, for example 2 to 6.0 h/m$^2$, such as 3 to 5.5 h/m$^2$, like 4 to 5 h/m$^2$, for example 1 to 3.5 h/m$^2$, like 2 to 6.5 h/m$^2$, such as 0.5 to 6.5 h/m$^2$.

Superficial air speed: It is the air speed in an empty tube filter. This is given in m/s. In a preferred embodiment the superficial air speed may be 0.1 m/s to 10 m/s. For example, the superficial air speed may be 5.5 m/s.

Capillary space: In association with fibers the term capillary space refers to the void between and/or within the fibers used to facilitate a capillary force in at least one direction. In association with porous material the term capillary space refers to open cells and or interconnected open cells in the material used to facilitate a capillary force in at least one direction. In association with beads capillary space refers to the void between the beads used to facilitate a capillary force in at least one direction.

The capillary space is compared to the total volume of the carrier material.
For fibrous material the capillary space to total volume ratio is between 20% to 70%, such as 20 % to 60%, like 30% to 70%. Preferrably, for a fiberous material, the capillary space is between 40% to 60%, such as between 45% to 55%, like 40% to 50%, for example 50% to 60%, and most preferred 50%.

For beads or pellets, the preferred porous space (equivalent to the capillary space) to total volume ratio is between 3% to 50%, such as between 3% to 15%, like 15% to 25%, such as between 25% to 35%, like 35% to 45% such as between 45% to 50%, like 5% to 45% such as between 10% to 25%, like 15% to 30%, most preferred 15% to 17%.

For porous material the preferred porous space to total volume ratio is between 5% to 60%, such as between 10% to 55%, like 15% to 50%, such as between 20% to 45%, like 25% to 40% such as between 27% to 45%, like 30% to 40% such as between 30% to 35%, most preferred 30% to 32%.

Gas/liquid ratio: The ratio between the gas volume passing through the tube filter to the liquid volume at the same time. For example, when 200,000 ml of gas and 2 ml of liquid flow in and out of a tube filter within the same time interval, the gas/liquid ratio is 200,000/2 = 100,000. The preferred gas/liquid ratio for a tube filter is between 2,500 and 500,000, such as between 2,700 and 500,000, like between 2,900 and 500,000, for example between 3,100 and 500,000 , such as between 3,300 and 500,000, like between 3,500 and 500,000, for example between 3,700 and 500,000, such as between 3,900 and 500,000, like between 4,100 and 500,000, for example between 4,300 and 500,000, such as between 4,500 and 500,000, like between 4,700 and 500,000, for example between 4,900 and 500,000, such as between 5,100 and 500,000, like between 6,000 and 500,000, for example between 7,000 and 500,000, such as between 8,000 and 500,000, like between 9,000 and 500,000, for example between 10,000 and 500,000, , like between 12,000 and 500,000, for example between 13,000 and 500,000 , such as between 14,000 and 500,000, like between 15,000 and 500,000, for example between 16,000 and 500,000, such as between 17,000 and 500,000, like between 18,000 and 500,000, for example between 19,000 and 500,000, , for example between 20,000 and 500,000, such as between 21,000 and 500,000, like between 22,000 and 500,000, for example between 23,000 and 500,000, , like between 24,000 and 500,000, for example between 25,000 and 500,000 , such as between 26,000 and 500,000, like between 27,000 and 500,000, for example between 28,000 and 500,000, such as between 29,000 and 500,000, like between 30,000 and 500,000, for example between 40,000 and 500,000, such as between 50,000 and 500,000, like between 60,000 and 500,000, for example between 70,000 and 500,000, such as between 80,000 and 500,000, like between 90,000 and 500,000, for example between 100,000 and 500,000, , for example between 120,000 and 500,000, such as between 140,000 and 500,000, like between 160,000 and 500,000, for example between 180,000 and 500,000,, like between 200,000 and 500,000, for example between 250,000 and 500,000, such as between 300,000 and 500,000, like between 350,000 and 500,000, for example between 400,000 and 500,000, such as between 450,000 and 500,000.

Empty bed air residence time (EBRT):

The EBRT is related to the time that the air spends in a tube filter, considering that the biofilter is empty. EBRT=$V_r$ / Q, $V_r$ = the empty bed volume of the tube filter.
Q = inlet gas flow.
The EBRT depends on the structure of the tube filter and the velocity of the air.

For example, the preferred EBRT for a tube filter of 1 to 5 meters in length may be between 0.5 sec. to 10 sec. such as between 0.5 s to 1.5 s, like between 1.5 s to 2.5 s, for example between 2.5 s to 3.5 s, like between 3.5 s to 4.5 s, such as between 4.5 s to 5.5 s, like between 5.5 s to 6.5 s , for example between 6:5 s to 7.5 s, such as between 7.5 s to 8.5 s, like between 8.5 s to 10 s. Most preferred, the EBRT is between 0.5 s to 2 s.

Retention time: The actual retention time of the gas to be treated in a packed tube filter. The time depends on the length of a tube and the speed of the air.
For example, the preferred retention time for a tube filter of 1 to 5 meters in length, 70 mm in width and 16 mm in height may be such as between 0.3 s to 1.5 s, like between 1.5 s to 2.5 s, for example between 2.5 s to 3.5 s, like between 3.5 s to 4.5 s, such as between 4.5 s to 5.5 s, like between 5.5 s to 6.5 s, for example between 6.5 s to 7.5 s, such as between 7.5 s to 8 s, most preferred between 0.3 sec and 1 sec.

Pressure drop: The pressure drop is the pressure difference between the inlet and the outlet of a biofilter. The unit is Pascal. It may be for example measured by a U-tube manometer. For example, the pressure drop for a tube filter of 1.5 meters length, 70 mm width, 16 mm height and an air velocity of 2.1 s/m may be 35 Pa.

Temperature

The biofilter according to the present invention could operate under a broad range of temperatures, preferably above 0 °C. For example, a preferred temperature may be between 10 °C to 40°C, like 15°C to 38°C, or room temperature. In one preferred embodiment the working temperature is between 15 °C to 25 °C. In another embodiment the preferred temperature may be 38°C. For carrier material colonized by mesophiles the preferred range is between 20 to 45 °C, for psychrophiles the preferred range is between 15 to 20 °C

PH: The pH refers to the pH value of the liquid supplied.

The pH of the liquid used according to the invention may preferably be 4.0 to 9.0, such as 5.0 to 8.0, for example 5.5 to 7.5, like 7.0. The pH may also be dependant on the contaminants to be treated. The suitable pH is known to a skilled person in the art.

Andersen factor: The Andersen factor is calculated as:

$$\text{Air velocity}^2 \ \times \ \text{specific surface area} \ / \ \text{pressure drop}$$

The Andersen factor is preferably as large as possible. With this factor one may be able to compare the cost efficiency of the packing material in different filters. The air velocity is the air speed in a packed tube filter. The pressure drop is representative for the energy used while the mass transference efficiency is dependent of the air velocity[2] and the specific surface area. The pressure loss is proportional to the square of the velocity. With this factor one is able to compare the cost efficiency of carrier materials and its arrangement in a biofilter of the same construction. A different Andersen factor is obtained when the construction of the filter and/or the carrier material are altered or rearranged.

For example, In a tube filter with the dimensions of width 70 mm, height 16 mm, length 1.5 m wherein the carrier material is glass fibre attached to the inner surface of the solid support.

Specific surface area = 158 $m^2/m^3$. Velocity: 2.1 m/s. (Velocity may be measured by an anemometer.) Pressure drop is measured to: 35 Pa. VSP-factor: $2.1^2 \cdot 158/ 35 = 19.9$

A biofilter according to the present invention has an Andersen factor of at least 17. It may be between 17 to 25, for example between 17 to 25, such as between 18 to 25, like between 19 to 25, for example between 20 to 25, such as between 21 to 25, like between 22 to 25, such as between 23 to 25, or for example between 24 to 25.

**Examples**

The following table represents several embodiments according to the present invention.

Example 1 Treatment of Ammonia

The contaminated gas contains 10 ppm ammonia. The tube filer contains glass fibres.

| | |
|---|---|
| Tube length | 1.5 m |
| Tube width | 70 mm |
| Tube height | 16 mm |
| Angle | 45° |
| Capillary space to total volume ratio | 50% |
| Diameter | $20\mu m$ |
| Fibre density | 1,433,121 fibres/$m^2$ |
| Specific surface liquid flow rate | 125 ml/h/$m^2$ |
| Specific surface Gas flow rate | 32,000 l/h/$m^2$. |
| Vaporization | 63% |
| Gas/Liquid ratio | 256,000 |
| Temperature | 20 °C |
| pH | 7.0 |

The vaporization was measured by comparing the amount of the liquid supplied and collected at the outlet of the biofilter.

Example 2 Treatment of H$_2$S

The contaminated gas contains 10 ppm of H$_2$S. The tube filer contains glass fibres.

| | |
|---|---|
| Tube length | 5 m |
| Tube width | 70 mm |
| Tube height | 16 mm |
| Angle | 45° |
| Capillary space to total volume ratio | 50% |
| Diameter | 20$\mu$m |
| Density | 1,433,121 fibres/m$^2$ |
| Specific surface liquid flow rate | 125 ml/h/m$^2$ |
| Specific surface gas flow rate | 3,200 l/h/m$^2$. |
| Vaporization | 63% |
| Gas/Liquid ratio | 25,600 |
| Temperature | 20 °C |
| pH | 6.0 |

Example 3 Treatment of volatile organic compounds.

The contaminated gas contains 10 ppm of acetate. The tube filer contains glass fibres.

| | |
|---|---|
| Tube length | 5 m |
| Tube width | 70 mm |
| Tube height | 16 mm |
| Angle | 20° |
| Capillary space to total volume ratio | 50% |
| Diameter | 20$\mu$m |
| Density | 1,433,121 fibres/m$^2$ |
| Specific surface liquid flow rate | 125 ml/h/m$^2$ |
| Specific surface gas flow rate | 32,000 l/h/m$^2$. |
| Vaporization | 63% |
| Gas/Liquid ratio | 256,000 |
| Temperature | 20°C |
| pH | 7.0 |

Example 4 Treatment of volatile organic compounds

Example 4 Treatment of halogenated hydrocarbon

The contaminated gas contains 100 mM of dichloromethane

| | |
|---|---|
| Tube length | 5m |
| Tube width | 16 mm |

(continued)

| Tube height | 16 mm |
|---|---|
| Angle | 45° |
| Capillary space to total volume ratio | 50% |
| Diameter | 20$\mu$m |
| Density | 1,433,121 fibres/m$^2$ |
| Specific surface liquid flow rate | 125 ml/h/m$^2$ |
| Specific surface gas flow rate | 3,125 l/h/m$^2$ |
| Vaporization | 63% |
| Gas/Liquid ratio | 25,000:1 |
| Temperature | 20 °C |
| pH | 6.0 |

Example 5 Treatment of volatile organic compounds

The contaminated gas contains 100 ppm of bichloromethane. The tube filer contains glass fibres.

| Tube length | 5m |
|---|---|
| Tube width | 16 mm |
| Tube height | 16 mm |
| Angle | 20° |
| Capillary space to total volume ratio | 50% |
| Diameter | 20$\mu$m |
| Density | 1,433,121 fibres/m$^2$ |
| Specific surface liquid flow rate | 125 ml/h/m$^2$ |
| Specific surface gas flow rate | 320 l/h/m$^2$. |
| Vaporization | 63% |
| Gas/Liquid ratio | 2,560 : 1 |
| Temperature | 20 °C |
| pH | 6.0 |

Example 6 Ammonia analysis

The method used for measuring NH3 is called the impinger method. A fraction of the exhaust air is continuously drawn at a fixed flow rate, which is controlled by a siphon (0,5 L min-1) through a pair of exotainers (1 ml each) containing a strong acid solution (H2SO4, 1 mM) and connected in series. NH3 is trapped by the acid and accumulates in the exotainer until 1 L of exhaust air has passed the acid. The values of the sampling flow rate and acid concentration are chosen so that the second exotainer, which serves as a control, does not contain more than 7% of the amount of NH3 trapped in the first exotainer. All sampling tubes are made of Teflon, and the distance from the exhaust air outlet to the first exotainer is kept under 10 cm to minimize death space, condensation and subsequent adsorption of NH3 in the tube. Finally, the NH3 concentration of the air is calculated from the NH4 content of the acid solution in the exotainers, which is determined spectrophotometrically using the Holm-Hansen method. Figures 1 and 2 show the capacity for removing ammonia by using a biofilter according to the present invention:

Example 7 Fatty Acid analysis

The fatty acids are captured with the same principles as the impinger method described above only the acid solution is exchanged with a strong base (1mM NaOH) wherein the fatty acids accumulate. The concentration of fatty acids in the air is calculated from fatty acid concentration trapped in the base solution, which is determined by HPLC on an AC11 HC column. The following shows the capacity for removing fatty acids by using a biofilter in one embodiment according to the present invention.

|  | concentration before filteration (ppm) | concentration after Alteration (ppm) | effect % |
|---|---|---|---|
| Acetate | 0.104656322 | 0 | 100 |
| Formate | 0.070113497 | 0 | 100 |

Example 8 GCMS analysis

Two samples are extracted before the filter and two after the filter. The amount of air analysed is 1 L collected with a flow of 600 ml x h$^{-1}$. The various gasses in the air flow are captured in two tubs placed in series. The first tube is packed with Tenax TA and Carbograph 1TD and the other tube (back-up) is packed with Carbograph 5TD. The back-up tube is mainly for capturing DMS. Afterwards the tubs are heated up and the gasses are released into a GCMS where various concentrations of the gasses are measured. Fig. 2 shows the capacity for removing contaminated gas by using a biofilter in one embodiment according to the present invention..

Example 9 Mercaptan and hydroagnsulfide analysis

A detector tube can be used to determine the mercaptan and hydrogensulfide in a sample. Commercially available detector tubes such as from Drägerwerk AG in Germany may be used.
The following table shows the capacity for removing contaminants in gas by using a biofilter in one embodiment according to the present invention.

|  | Before | After | Effect % |
|---|---|---|---|
| SH: | 0.40 ppm | 0.0 | 100 |
| $H_3C$-SH: | 0.00 ppm | 0.0 | ------ |

Example 10 Flow controller

In a biofilter according to the present invention, the contaminated gas to be treated comprises ammonia. The flow controller will measure the concentration of the salts of $NH_4^+$, $NO_2^-$, and $NO_3^-$. The sample is collected at the end of the biofilter where the liquid is disposed. The flow controller measures the conductivity of $NH_4^+$, $NO_2^-$, and $NO_3^-$ in $mS/cm^3$.

**Claims**

1.  A method for decontaminating a contaminated gas, said method comprising the steps of

    i) providing a tube filter comprising a solid support defining a flow passage, said flow passage comprising a first opening and a second opening, or providing a biofilter system comprising a plurality of such tube filters,
    ii) contacting said tube filter or biofilter system with a contaminated gas diverted to said tube filter(s) through said first tube filter opening,
    iii) contacting said contaminated gas and a biomass adhered to a carrier material attached to the inner surface of the flow passage, with a liquid diverted to said tube filter(s) through said second tube filter opening, the carrier material exerting a capillary force on liquid passing through the flow passage,
    wherein said first and second tube filter openings are located at opposite ends of the solid support,
    wherein said liquid and said contaminated gas are flowing counter currently,
    wherein the inner surface of said flow passage is impermeable to liquid,

wherein the contacting of the contaminated gas and the liquid brings the contaminants of the contaminated gas to contact the biomass, and

iv) decontaminating said contaminated gas as a result of the contacting of the contaminated gas and the biomass.

2. The method of claim 1, wherein the specific surface liquid flow rate is between 30 and 500 ml/m$^2$/h, and/or wherein the specific surface liquid velocity is between 0.08 and 7 mm/h/m$^2$, and/or wherein the gas/liquid volume ratio is between 2500:1 and 500000:1, and>or wherein the decontamination capacity exceeds 10 g ammonia per hour per cubic metre of filter material.

3. A tube filter comprising

i) a flow passage comprising a first opening for receiving a contaminated gas, the flow of said contaminated gas thereby defining a first flow direction in said flow passage, and a second opening for receiving a liquid, the flow of said liquid thereby defining a second flow direction in said flow passage, wherein said first and second openings are located at opposite ends of the flow passage, whereby the contaminated gas and the liquid flow counter currently in the flow passage, as the first flow direction and the second flow direction are opposite,

ii) a carrier material attached to the inner surface of the flow passage, wherein said carrier material is exerting a capillary force on liquid passing through the flow passage, and

iii) a biomass adhered to the carrier material, wherein said biomass is capable of decontaminating a contaminated gas being diverted through the tube filter and contacting said biomass, and

wherein a solid support defines said flow passage, and wherein the cross section of the tube filter is

- non-circular,

or

- selected from the group of cross sectional shapes of square, rectangular, triangular and polygonal,

and wherein the tube filter is **characterized in that**, the inner surface of said flow passage is impermeable to liquid.

4. The tube filter according to claim 3, wherein said flow passage is a hollow elongated solid support and/or wherein the elongated tube filter has a length of at least 1 m.

5. The tube filter according to claim 3, wherein said carrier material is a fibrous material.

6. The tube filter according to claim 5, wherein said fibrous material has a capillary space of from 20% to 70%, and/or wherein said fibrous material has a diameter of less than 90 $\mu$m.

7. The tube filter according to claim 3, wherein said carrier material is a porous material.

8. The tube filter according to claim 7, wherein said porous material has a capillary space of from 5% to 60%, and/or wherein said porous material has open cells of 5 $\mu$m to 100 $\mu$m in diameter.

9. The tube filter according to claim 3, said tube filter having a specific surface area of from 80 to 500 m$^2$/m$^3$, for example 80 to 400 m$^2$/m$^3$, like 90 to 300 m$^2$/m$^3$, and/or said tube filter having a passage area of from 1 to 100 cm$^2$, preferably between 5 to 70 cm$^2$ and more preferably between 9 to 50 cm$^2$.

10. The tube filter according to claim 3, said tube filter adapted to allow for a specific surface liquid flow rate of from 30 to 500 ml/h/m$^2$ over the surface of the carrier material and/or said tube filter adapted to allow for a specific surface liquid velocity of from 0.08 to 7 m/h/m$^2$ through the surface of the carrier material, and/or said tube filter adapted to allow for a gas/liquid ratio from 2,500 to 500,000:1 for gas and liquid passing through the flow passage, and/or said tube filter adapted to allow for a percentage of liquid vaporization between 50% and 90% for liquid passing through the flow passage.

11. A biofilter system comprising a plurality of tube filters, each of said tube filters comprising

i) a flow passage comprising a first opening for receiving a contaminated gas, the flow of said contaminated gas thereby defining a first flow direction in said flow passage, and a second opening for receiving a liquid, the flow of said liquid thereby defining a second flow direction in said flow passage, wherein said first and second openings are located at opposite ends of the flow passage, whereby the contaminated gas and the liquid flow counter currently in the flow passage, as the first flow direction and the second flow direction are opposite,

ii) a carrier material attached to the inner surface of the flow passage, wherein said carrier material is exerting a capillary force on liquid passing through the flow passage, and

iii) a biomass adhered to the carrier material, wherein said biomass is capable of decontaminating a contaminated gas being diverted through the tube filter and contacting said biomass, and

wherein a solid support defines said flow passage and wherein each tube filter is **characterized in that** the inner surface of said flow passage is impermeable to liquid, the biofilter system further comprising at least one ventilation device configured to facilitate a flow of contaminated gas through said tube filters.

12. A biofilter system according to claim 11, wherein each tube filter comprises the features of any of preceding claims 4-10.

13. A roof construction fitted with the biofilter system according to any of the claims 11 to 12.

**Patentansprüche**

1. Verfahren zum Dekontaminieren eines verunreinigten Gases, wobei das Verfahren die folgenden Schritte umfasst:

i) Bereitstellen eines Rohrfilters, der einen festen Träger umfasst, der einen Strömungskanal definiert, wobei der Strömungskanal eine erste Öffnung und eine zweite Öffnung umfasst, oder Bereitstellen eines Biofiltersystems, das eine Vielzahl solcher Rohrfilter umfasst,

ii) Kontaktieren des Rohrfilters oder Biofiltersystems mit einem verunreinigten Gas, das durch die erste Rohrfilteröffnung an den (die) Rohrfilter umgeleitet wird,

iii) Kontaktieren des verunreinigten Gases und einer Biomasse, die an einem Trägermaterial haftet, das an der Innenfläche des Strömungskanals angebracht ist, mit einer Flüssigkeit, die durch die zweite Rohrfilteröffnung an den (die) Rohrfilter umgeleitet wird, wobei das Trägermaterial eine Kapillarkraft auf die durch den Strömungskanal strömende Flüssigkeit ausübt,

wobei sich die ersten und zweiten Rohrfilteröffnungen an gegenüberliegenden Enden des festen Trägers befinden,

wobei die Flüssigkeit und das verunreinigte Gas gegenläufig strömen,

wobei die Innenfläche des Strömungskanals für Flüssigkeit undurchlässig ist,

wobei das Kontaktieren des verunreinigten Gases und der Flüssigkeit die Verunreinigungen des verunreinigten Gases dazu bringt, die Biomasse zu kontaktieren, und

iv) Dekontaminieren des verunreinigten Gases als Ergebnis des Kontaktierens des verunreinigten Gases und der Biomasse.

2. Verfahren nach Anspruch 1, wobei die spezifische Flüssigkeitsoberflächendurchflussrate zwischen 30 und 500 ml/m$^2$/h liegt und/oder wobei die spezifische Flüssigkeitsoberflächengeschwindigkeit zwischen 0,08 und 7 mm/h/m$^2$ liegt und/oder wobei das Gas-/Flüssigkeit-Volumenverhältnis zwischen 2.500:1 und 500.000:1 liegt und/oder wobei die Dekontaminierungskapazität 10 g Ammoniak pro Stunde pro Kubikmeter Filtermaterial überschreitet.

3. Rohrfilter, umfassend:

i) einen Strömungskanal, der Folgendes umfasst: eine erste Öffnung zum Aufnehmen eines verunreinigten Gases, wobei der Strom des verunreinigten Gases dadurch eine erste Strömungsrichtung in dem Strömungskanal definiert, und eine zweite Öffnung zum Aufnehmen einer Flüssigkeit, wobei der Strom der Flüssigkeit dadurch eine zweite Strömungsrichtung in dem Strömungskanal definiert, wobei sich die ersten und zweiten Öffnungen an gegenüberliegenden Enden des Strömungskanals befinden, wobei das verunreinigte Gas und die Flüssigkeit gegenläufig in dem Strömungskanal strömen, da die erste Strömungsrichtung und die zweite Strömungsrichtung einander entgegengesetzt sind,

ii) ein Trägermaterial, das an der Innenfläche des Strömungskanals angebracht ist, wobei das Trägermaterial eine Kapillarkraft auf die durch den Strömungskanal strömende Flüssigkeit ausübt, und

iii) eine Biomasse, die an dem Trägermaterial haftet, wobei die Biomasse ein verunreinigtes Gas, das durch den Rohrfilter umgeleitet wird und die Biomasse kontaktiert, dekontaminieren kann, und

wobei ein fester Träger den Strömungskanal definiert und wobei der Querschnitt des Rohrfilters:

- nicht kreisförmig ist

oder

- aus der Gruppe von einer quadratischen, rechteckigen, dreieckigen und polygonalen Querschnittsform ausgewählt ist,

und wobei der Rohrfilter **dadurch gekennzeichnet ist, dass** die Innenfläche des Strömungskanals für Flüssigkeit undurchlässig ist.

4. Rohrfilter nach Anspruch 3, wobei der Strömungskanal ein hohler, länglicher fester Träger ist und/oder wobei der längliche Rohrfilter eine Länge von zumindest 1 m aufweist.

5. Rohrfilter nach Anspruch 3, wobei das Trägermaterial ein Fasermaterial ist.

6. Rohrfilter nach Anspruch 5, wobei das Fasermaterial einen Kapillarraum von zwischen 20 % und 70 % aufweist und/oder wobei das Fasermaterial einen Durchmesser von weniger als 90 $\mu$m aufweist.

7. Rohrfilter nach Anspruch 3, wobei das Trägermaterial ein poröses Material ist.

8. Rohrfilter nach Anspruch 7, wobei das poröse Material einen Kapillarraum von 5 % bis 60 % aufweist und/oder wobei das poröse Material offene Zellen mit einem Durchmesser von 5 $\mu$m bis 100 $\mu$m aufweist.

9. Rohrfilter nach Anspruch 3, wobei der Rohrfilter eine spezifische Oberfläche von 80 bis 500 $m^2/m^3$ aufweist, zum Beispiel 80 bis 400 $m^2/m^3$, wie etwa 90 bis 300 $m^2/m^3$, und/oder wobei der Rohrfilter eine Durchtrittsfläche von 1 bis 100 $cm^2$ aufweist, bevorzugt zwischen 5 und 70 $cm^2$ und besonders bevorzugt zwischen 9 und 50 $cm^2$.

10. Rohrfilter nach Anspruch 3, wobei der Rohrfilter angepasst ist, um eine spezifische Flüssigkeitsoberflächendurchflussrate von 30 bis 500 ml/h/$m^2$ über die Oberfläche des Trägermaterials zuzulassen, und/oder wobei der Rohrfilter angepasst ist, um eine spezifische Flüssigkeitsoberflächengeschwindigkeit von 0,08 bis 7 m/h/$m^2$ durch die Oberfläche des Trägermaterials zuzulassen, und/oder wobei der Rohrfilter angepasst ist, um ein Gas-/Flüssigkeit-Verhältnis von 2.500 bis 500.000:1 für das durch den Strömungskanal strömende Gas und die dadurch strömende Flüssigkeit zuzulassen, und/oder wobei der Rohrfilter angepasst ist, um einen Flüssigkeitsverdampfungsanteil zwischen 50 % und 90 % für die durch den Strömungskanal strömende Flüssigkeit zuzulassen.

11. Biofiltersystem, das eine Vielzahl von Rohrfiltern umfasst, wobei jeder der Rohrfilter Folgendes umfasst:

i) einen Strömungskanal, der Folgendes umfasst: eine erste Öffnung zum Aufnehmen eines verunreinigten Gases, wobei der Strom des verunreinigten Gases dadurch eine erste Strömungsrichtung in dem Strömungskanal definiert, und eine zweite Öffnung zum Aufnehmen einer Flüssigkeit, wobei der Strom der Flüssigkeit dadurch eine zweite Strömungsrichtung in dem Strömungskanal definiert, wobei sich die ersten und zweiten Öffnungen an gegenüberliegenden Enden des Strömungskanals befinden, wobei das verunreinigte Gas und die Flüssigkeit gegenläufig in dem Strömungskanal strömen, da die erste Strömungsrichtung und die zweite Strömungsrichtung einander entgegengesetzt sind,

ii) ein Trägermaterial, das an der Innenfläche des Strömungskanals angebracht ist, wobei das Trägermaterial eine Kapillarkraft auf die durch den Strömungskanal strömende Flüssigkeit ausübt, und

iii) eine Biomasse, die an dem Trägermaterial befestigt ist, wobei die Biomasse ein verunreinigtes Gas, das durch den Rohrfilter umgeleitet wird und die Biomasse kontaktiert, dekontaminieren kann, und

wobei ein fester Träger den Strömungskanal definiert und wobei jeder Rohrfilter **dadurch gekennzeichnet ist, dass** die Innenfläche des Strömungskanals für Flüssigkeit undurchlässig ist, wobei das Biofiltersystem ferner zumindest eine Lüftungsvorrichtung umfasst, die konfiguriert ist, um eine Strömung verunreinigten Gases durch die Rohrfilter zu ermöglichen.

12. Biofiltersystem nach Anspruch 11, wobei jeder Rohrfilter die Merkmale nach einem der vorhergehenden Ansprüche 4-10 umfasst.

13. Dachkonstruktion, die mit dem Biofiltersystem nach einem der Ansprüche 11 bis 12 ausgestattet ist.

**Revendications**

1. Procédé de décontamination d'un gaz contaminé, ledit procédé comprenant les étapes consistant à

    i) fournir un filtre tubulaire comprenant un support solide définissant un passage d'écoulement, ledit passage d'écoulement comprenant une première ouverture et une deuxième ouverture, ou fournir un système de biofiltre comprenant une pluralité de ces filtres tubulaires,

    ii) mettre en contact ledit filtre tubulaire ou ledit système de biofiltre avec un gaz contaminé détourné vers ledit/lesdits filtre(s) tubulaire(s) par ladite première ouverture du filtre tubulaire,

    iii) mettre en contact ledit gaz contaminé et une biomasse adhérant à un matériau de support fixé à la surface interne du passage d'écoulement, avec un liquide détourné vers ledit/lesdits filtre(s) tubulaire(s) par ladite deuxième ouverture de filtre tubulaire, le matériau de support exerçant une force capillaire sur le passage du liquide par le passage d'écoulement,

    dans lequel lesdites première et deuxième ouvertures du filtre tubulaire sont situées aux extrémités opposées du support solide,

    dans lequel ledit liquide et ledit gaz contaminé s'écoulent à contre-courant,

    dans lequel la surface interne dudit passage d'écoulement est imperméable au liquide,

    dans lequel la mise en contact du gaz contaminé et du liquide amène les contaminants du gaz contaminé en contact avec la biomasse, et

    iv) décontaminer ledit gaz contaminé en conséquence de la mise en contact du gaz contaminé et de la biomasse.

2. Procédé selon la revendication 1, dans lequel le débit du liquide de surface spécifique se situe entre 30 et 500 ml/m$^2$/h, et/ou dans lequel la vitesse de liquide de surface spécifique se situe entre 0,08 et 7 mm/h/m$^2$, et/ou dans lequel le rapport volumique du gaz/liquide se situe entre 2 500 : 1 et 500 000 : 1,

    et/ou dans lequel la capacité de décontamination dépasse 10 g d'ammoniac par heure par mètre cube du matériau de filtrage.

3. Filtre tubulaire comprenant

    i) un passage d'écoulement comprenant une première ouverture pour recevoir un gaz contaminé, l'écoulement dudit gaz contaminé définissant ainsi une première direction d'écoulement dans ledit passage d'écoulement, et une deuxième ouverture pour recevoir un liquide, l'écoulement dudit liquide définissant ainsi une deuxième direction d'écoulement dans ledit passage d'écoulement, dans lequel lesdites première et deuxième ouvertures sont situées à des extrémités opposées du passage d'écoulement, moyennant quoi le gaz contaminé et le liquide s'écoulent à contre-courant dans le passage d'écoulement, lorsque la première direction d'écoulement et la deuxième direction d'écoulement sont opposées,

    ii) un matériau de support fixé à la surface interne du passage d'écoulement, dans lequel ledit matériau de support exerce une force capillaire sur un liquide passant par le passage d'écoulement, et

    iii) une biomasse adhérant au matériau de support, dans lequel ladite biomasse est capable de décontaminer un gaz contaminé qui est détourné dans le filtre tubulaire et entre en contact avec la biomasse, et

    dans lequel un support solide définit ledit passage d'écoulement, et dans lequel la section transversale du filtre tubulaire est

    - non circulaire,
    ou
    - choisie dans le groupe des formes de section transversale carrées, rectangulaires, triangulaires et polygonales et dans lequel le filtre tubulaire est **caractérisé en ce que** la surface interne dudit passage d'écoulement est imperméable au liquide.

4. Filtre tubulaire selon la revendication 3, dans lequel ledit passage d'écoulement est un support solide allongé creux et/ou dans lequel le filtre tubulaire allongé a une longueur d'au moins 1 m.

5. Filtre tubulaire selon la revendication 3, dans lequel ledit matériau de support est un matériau fibreux.

6. Filtre tubulaire selon la revendication 5, dans lequel ledit matériau fibreux a un espace capillaire de 20 % à 70 %, et/ou dans lequel ledit matériau fibreux a un diamètre de moins de 90 $\mu$m.

**7.** Filtre tubulaire selon la revendication 3, dans lequel ledit matériau de support est un matériau poreux.

**8.** Filtre tubulaire selon la revendication 7, dans lequel ledit matériau poreux a un espace capillaire de 5 % à 60 % et/ou dans lequel ledit matériau poreux a des cellules ouvertes de 5 $\mu$m à 100 $\mu$m de diamètre.

**9.** Filtre tubulaire selon la revendication 3, ledit filtre tubulaire ayant une surface spécifique de 80 à 500 m$^2$/m$^3$, par exemple de 80 à 400 m$^2$/m$^3$, telle que 90 à 300 m$^2$/m$^3$ et/ou ledit filtre tubulaire ayant une surface de passage de 1 à 100 cm$^2$, de préférence entre 5 et 70 cm$^2$ et de manière davantage préférée, entre 9 et 50 cm$^2$.

**10.** Filtre tubulaire selon la revendication 3, dans lequel ledit filtre tubulaire est adapté pour permettre le débit d'un liquide de surface spécifique de 30 à 500 ml/h/m$^2$ sur la surface du matériau de support et/ou ledit filtre tubulaire est adapté pour permettre une vitesse de liquide de surface spécifique de 0,08 à 7 m/h/m$^2$ par la surface du matériau de support, et/ou ledit filtre tubulaire est adapté pour permettre un rapport gaz/liquide de 2 500 à 500 000 : 1 pour le gaz et le liquide passant dans le passage d'écoulement, et/ou le filtre tubulaire est adapté pour permettre un pourcentage de vaporisation de liquide entre 50 % et 90 % pour le liquide passant dans le passage d'écoulement.

**11.** Système de biofiltre comprenant une pluralité de filtres tubulaires, chacun desdits filtres tubulaires comprenant

i) un passage d'écoulement comprenant une première ouverture pour recevoir un gaz contaminé, l'écoulement dudit gaz contaminé définissant ainsi une première direction d'écoulement dans ledit passage d'écoulement, et une deuxième ouverture pour recevoir un liquide, l'écoulement dudit liquide définissant ainsi une deuxième direction d'écoulement dans ledit passage d'écoulement, dans lequel lesdites première et deuxième ouvertures sont situées à des extrémités opposées du passage d'écoulement, moyennant quoi le gaz contaminé et le liquide s'écoulent à contre-courant dans le passage d'écoulement, lorsque la première direction d'écoulement et la deuxième direction d'écoulement sont opposées,
ii) un matériau de support fixé à la surface interne du passage d'écoulement, dans lequel ledit matériau de support exerce une force capillaire sur un liquide passant dans le passage d'écoulement, et
iii) une biomasse adhérant au matériau de support, dans lequel ladite biomasse est capable de décontaminer un gaz contaminé qui est détourné dans le filtre tubulaire et entre en contact avec ladite biomasse, et

dans lequel ledit support définit un passage d'écoulement et dans lequel chaque filtre tubulaire est **caractérisé en ce que** la surface interne dudit passage d'écoulement est imperméable au liquide, le système de biofiltre comprenant en outre au moins un dispositif de ventilation configuré pour faciliter un écoulement du gaz contaminé dans lesdits filtres tubulaires.

**12.** Système de biofiltre selon la revendication 11, dans lequel chaque filtre tubulaire comprend les caractéristiques selon l'une quelconque des revendications 4 à 10 précédentes.

**13.** Construction de toit dotée du système de biofiltre selon l'une quelconque des revendications 11 à 12.

FIG. 1

FIG. 2

FIG. 3

FIG. 4

FIG. 5

FIG. 6

FIG. 7

FIG. 8

**Air outlet**       **Fresh water supply**

**Tube filter**

**Air inlet**       **Liquid discharge**

FIG. 9

FIG. 10

FIG. 11

FIG. 12

FIG. 13

FIG. 14

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6721020 B1
- EP 1091797 B1
- US 20060027099 A
- KR 0102092 W
- WO 9318800 A
- DE 10132224
- EP 0632730 B1